# EUROPÄISCHE PATENTANMELDUNG

(11) **EP 0 813 333 A2**
(43) Veröffentlichungstag der Anmeldung: **17.12.1997**
(21) Anmeldenummer: 97109489.1
(22) Anmeldetag: 11.06.1997
(51) Int. Cl.: H04M 19/08, H04M 1/00

(54) **Elektronische Sprechschaltungsanordnung**

(30) Priorität: 14.06.1996 DE 19623827
(71) Anmelder: SIEMENS AKTIENGESELLSCHAFT, 80333 München (DE)
(72) Erfinder: Bardl, Artur, 81375 München (DE)

(57) **Zusammenfassung**

Elektronische Sprechschaltungsanordnung, die über eine erste und zweite Leitungsklemme an eine Telefonleitung anschließbar ist, mit einem Rufteil, einer Sendeeinrichtung, einer Empfängereinrichtung, einer symmetrischen Modulatorschaltung mit Spannungsstabilisierung, einer symmetrischen Geräteimpedanzeinrichtung mit Mitteln zur Symmetrieregelung und Gleichstrombegrenzung und einer symmetrischen Steuereinrichtung.

## Beschreibung

Die Erfindung betrifft eine elektronische Sprechschaltungsanordnung, die über eine erste und zweite Leitungsklemme an eine Telefonleitung anschließbar ist, mit einem Rufteil, einer Sendeeinrichtung, einer Empfängereinrichtung, einer Geräteimpedanzeinrichtung und einer Steuereinrichtung.

Die Ankopplung immer höherfrequenter arbeitender Telefonzusatzgeräte an die analoge Leitungsschnittstelle erhöht die Gefahr von Einkopplungen der Nutz-/Störstrahlung in die Audioverstärkungswege und führt zu Störungen der Funktion. Die hierbei entstehenden Demodulationsprodukte sind nicht mehr aus dem Basisband des analogen Übertragungskanals fernzuhalten.

Aus Aufwands- und Kostengründen sind alle bekannten elektronischen Sprechschaltungen in Bezug auf die sich zwischen den schwimmenden Potentialen der a,b-Adern sich selbst definierende Bezugsmasse unsymmetrisch. Im allgemeinen ist das Bezugsmassepotential, auf das alle Einkopplungen hin kurzgeschlossen werden, immer sehr nahe bei der negativen Leitungsader. Zur positiven Leitungsader hin liegt der gewünschte Arbeitswiderstand des Gerätes, über den die Arbeitsspannung abfällt. Störeinkopplungen werden auf die Bezugsmasse der Spannungsversorgung kurzgeschlossen. Dadurch entsteht eine Störschleife, die sich als Brummspannung im Leitungsnetz bemerkbar macht.

Diese Unsymmetrie erhöht die Schwierigkeiten bei der Layoutgestaltung zur Vermeidung von Einkopplungen. Bei Einsatz von Übertragern, wie sie in der klassischen analogen Vermittlungstechnik verwendet werden, sind diese Probleme weitestgehend beseitigt, da das Speise- und das Empfängermassepotential immer bei der halben Versorgungsspannung liegt und über die magnetische Kopplung auf der Sekundärseite des Übertragungskreises ein neuer unabhängiger Massebezug gewählt werden kann. Diese Vorgehensweise ist beim Telefon als Endanschlußgerät aus Kostengründen nicht wirtschaftlich.

Der Erfindung liegt die Aufgabe zugrunde, eine Anordnung für eine elektronische Sprechschaltung anzugeben, die unter den gegebenen Randbedingungen bei galvanischer Kopplung eine Symmetrierung des Bezugsmassepotentials auf die halbe Versorgungsspannung zwischen den a,b-Anschlußklemmen ermöglicht.

Die Aufgabe wird durch eine Anordnung gemäß Patentanspruch 1 gelöst. Ausgestaltungen und Weiterbildungen des Erfindungsgedankens sind Gegenstand der Unteransprüche.

Die Erfindung wird nachfolgend anhand der in den Figuren der Zeichnungen dargestellten Ausführungsbeispiele näher erläutert, wobei gleiche Elemente mit gleichen Bezugszeichen versehen sind. Es zeigt:
- Figur 1: das Blockschaltbild für eine erfindungsgemäße symmetrische elektronische Sprechschaltung;
- Figur 2: das Blockschaltbild für eine Spannungsstabilisierungsschaltung mit Modulator bei einer erfindungsgemäßen Sprechschaltung;
- Figur 2a: die Realisierung des Modulators für den negativen Leitungszug bei einer erfindungsgemäßen Sprechschaltung;
- Figur 2b: ein vereinfachtes Schaltbild für die Auskopplung des Empfängssignals aus der symmetrischen Modulatorschaltung bei einer erfindungsgemäßen Sprechschaltung;
- Figur 3: das Blockschaltbild für die Realisierung der symmetrischen Geräteimpedanz bei einer erfindungsgemäßen Sprechschaltung;
- Figur 3a: die Realisierung einer Gleichstromdrossel für den positiven Leitungszug bei einer erfindungsgemäßen Sprechschaltung.

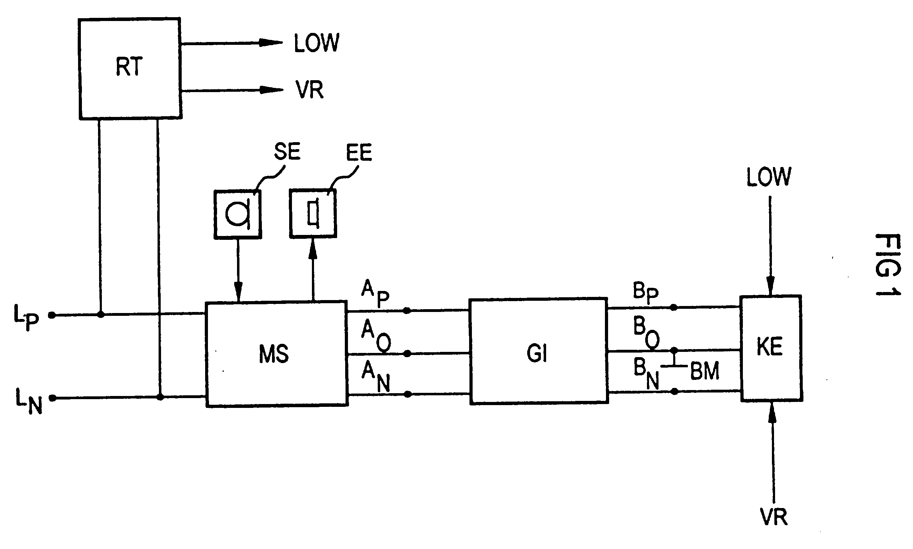

Figur 1 zeigt das Blockschaltbild der erfindungsgemäßen symmetrischen elektronischen Sprechschaltung. Dabei bilden die Knoten L_{P} und L_{N} die analogen Leitungsschnittstellen zwischen der elektronischen Sprechschaltung und dem Betreibernetz, zum Beispiel dem Telefonnetz. Es stehen jeweils die Indizes P und N für den positiven bzw. negativen Leitungszug der elektronischen Sprechschaltung. Über die Knoten L_{P} und L_{N} werden Signale bidirektional empfangen und gesendet. Die Knoten L_{P} und L_{N} haben bei Ankopplung der elektronischen Sprechschaltung an das öffentliche Telefonnetz im Ruhezustand üblicherweise Potentiale von 60 V bzw. 0 V. Im folgenden sind Eingänge und Ausgänge der Elemente der elektronischen Sprechschaltung für den Empfangsmodus festgelegt worden. Im Sendemodus sind Eingänge und Ausgänge entsprechend vertauscht. Die Knoten L_{P} und L_{N} sind eingangsseitig mit der Modulatorschaltung (MS) verbunden. Ausgangsseitig ist die Modulatorschaltung über die Knoten A_{P}, A_{N} und A₀ mit der Geräteimpedanzeinrichtung (GI) verbunden. Zusätzlich ist die Modulatorschaltung mit einer Empfängereinrichtung (EE) zum Empfangen von Signalen und einer Sendeeinrichtung (SE) zum Senden von Signalen verbunden. Die Potentiale der Knoten A_{P} und A_{N} sind symmetrisch bezüglich des Potentials im Knoten A₀. Die Geräteimpedanzeinrichtung ist ausgangsseitig über die Knoten B_{P}, B_{N} und B₀ mit der Steuereinrichtung (KE) verbunden. Die Potentiale der Knoten B_{P} und B_{N} sind symmetrisch bezüglich des Bezugsmassepotentials (BM) im Knoten B₀. Die Knoten L_{P} und L_{N} sind zusätzlich auch mit einem Rufteil (RT), welches Vorrichtungen zur Ruferkennung und Rufabschaltung enthält, verbunden. Vom Rufteil werden die Steuerpotentiale LOW und VR zur Ansteuerung der Steuereinrichtung bereitgestellt.

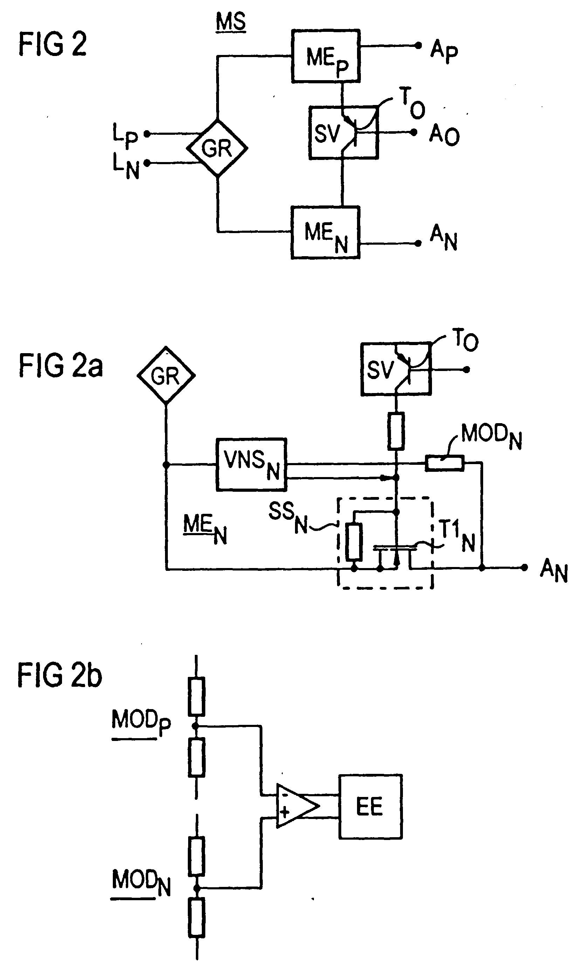

Figur 2 zeigt das Blockschaltbild für eine Spannungsstabilisierungsschaltung mit Modulator. Signale werden über die Knoten L_{P} und L_{N} in die elektronische Sprechschaltung eingekoppelt und einer Gleichrichtungsschaltung (GR) zugeführt. Am Ausgang der Gleichrichterschaltung werden die Signale den Modulatoreinrichtungen (ME_{P}, ME_{N}) zugeführt. Jeweils ein erster Ausgang der Modulatoreinrichtungen (ME_{P} bzw. ME_{N}) ist mit den Knoten A_{P} bzw. A_{N} verbunden. Die Schaltvorrichtung (SV) verbindet die jeweils zweiten Ausgänge der Modulatoreinrichtungen miteinander. Als Schaltvorrichtung kann zum Beispiel ein Schalttransistor (T₀) verwendet werden, dessen Emitter-Kollektor-Strecke die jeweils Zweiten Ausgänge der Modulatoreinrichtungen miteinander verbindet. Die Basis des Schalttransistors ist mit dem Knoten A₀ verbunden. Zusätzlich sind in der Schaltvorrichtung weitere Gerätefunktionen wie Gabelumschalter, Wahl bei aufgelegtem Hörer, Haltefunktion und Nummernschalter vorgesehen. Im eingeschwungenen Zustand sind die Regelstrecken der Modulatoreinrichtungen so ausgeregelt, daß die Potentiale in den Knoten A_{P} und A_{N} symmetrisch bezüglich des Potentials im Knoten A₀ sind.

Die Modulatoreinrichtungen enthalten Vorrichtungen zum Öffnen und Schließen des Schleifenstromes. Als Schleifenstromschließer werden meist MOS-Transistoren oder bipolare Transistoren verwendet. Bei Verwendung von MOS-Transistoren wie auch bei bipolaren Transistoren müssen komplementäre Typen verwendet werden, die wegen der unterschiedlichen halbleiterphysikalischen Leitungseigenschaften sehr unterschiedliche Kennlinien besitzen. Die Symmetrie erfordert, daß die Drain-Source-Spannungabfälle über den Schleifenstromschließer möglichst gleich groß sind. Dies macht es erforderlich, für die Schleifenstromschließer im positiven und negativen Leitungszug eine Konstantspannungsregelung vorzusehen.

Figur 2a zeigt das Blockschaltbild für eine Realisierung der Konstantspannungsregelung für die Modulatoreinrichtung ME_{N}. Die Modulatoreinrichtung ME_{N} besteht im wesentlichen aus einem Schleifenstromschließer (SS_{N}), einer Vergleicher- und Nachführstufe (VNS_{N}) und einem Modulatorspannungsteiler (MOD_{N}). Im vorliegenden Beispiel besteht der Schleifenstromschließer im wesentlichen aus einem selbstsperrenden n-Kanal-MOS-Transistor T1_{N} und einem parallel zur Gate-Source-Strecke des Transistors geschalteten Widerstand. Der Spannungsabfall über dem Widerstand steuert den Transistor leitfähig und schaltet die Spannungsstabilisierungsstufe der Modulatoreinrichtung durch. Die Drain-Source-Strecke des MOS-Transistors verbindet den Knoten A_{N} mit der Gleichrichterschaltung. Die Gateansteuerung erfolgt über den Kollektorstrom des Schalttransistors T₀. Parallel zur Drain-Source-Strecke des MOS-Transistors ist die Vergleicher- und Nachführstufe (VNS_{N}) in Reihe geschaltet mit dem Modulatorspannungsteiler (MOD_{N}). Der Modulatorspannungsteiler bildet den Arbeitswiderstand der Vergleicher- und Nachführstufe. Der Ausgang zweiter Eingang der Vergleicher- und Nachführstufe ist verbunden mit dem Gateanschluß des MOS-Transistors des Schleifenstromschließers.

Die Vergleicher- und Nachführstufe VNS_{N} besteht im wesentlichen aus einem Stromspiegel und den Emitter-Eingängen des Stromspiegels vorgeschaltete Arbeitswiderstände. Durch einen von der Sendeeinrichtung (SE) eingeprägten DC-Grundstrom wird in der Vergleicher- und Nachführstufe der Spannungsabfall an den beiden Arbeitswiderständen miteinander verglichen. Sind die Spannungsabfälle an den beiden Arbeitswiderständen gleich, dann ist ein DC-Arbeitspunkt hergestellt. Die Konstantspannungen an den beiden MOS-Transistoren der Schleifenstromschließer sind gleich. Sind die Konstantspannungen der MOS-Transistoren unterschiedlich, dann sind die Spannungsabfälle an den Arbeitswiderständen der Stromspiegel ebenfalls unterschiedlich. Je nachdem ob der DC-Arbeitspunkt überschritten oder unterschritten wurde, wird im negativen Leitungszug ein Strom zum Kollektorstrom des Transistors T₀ hinzugefügt bzw. im positiven Leitungszug ein Strom vom Emitterstrom des Transistors T₀ abgezogen. Damit lassen sich die Drain-Source-Spannungen der MOS-Transistoren über die Vergleicher- und Nachführstufe modulieren. Die Konstantspannung über den MOS-Transistoren wird so wiederhergestellt. Durch die Konstantspannungsregelung und den symmetrischen Aufbau der Modulatorschaltung erhält man im Knoten A₀ das Mittenpotential zu den Potentialen in den Knoten A_{P} und A_{N}.

Figur 2b zeigt das vereinfachte Schaltbild für die Auskopplung eines Empfängssignals aus der symmetrischen Modulatorschaltung. Zwischen den beiden gleich großen Widerständen der Modulatorspannungsteiler MOD_{P} und MOD_{N} wird jeweils ein Signal ausgekoppelt und der Empfängereinrichtung (EE) zugeführt. Die ausgekoppelten Signale enthalten neben dem Empfangssignalanteil auch ein Sendesignalanteil, der in der Empfängereinrichtung unerwünscht ist. Die ausgekoppelten Signale werden den beiden zueinander inversen Eingängen eines Operationsverstärker zugeführt. Durch die Spannungsteilerverhältnisse von 1 : 1 und der gleichen Gesamtwiderstände von MOD_{P} und MOD_{N} ist das dem Empfangssignal überlagerte Sendesignal um 180° phasenverschoben. Das Sendesignal wird durch den positiven und negativen Eingang des Operationsverstärkers ausgelöscht, während das Empfängersignal um den Faktor 2 verstärkt wird. In der Technik wird eine solche Schaltung oft auch als Hybrid oder Echocanceller bezeichnet. In der Empfängereinrichtung wird das Empfangssignal nach bekannter Art weiterverstärkt und am Wandler abgestrahlt. In der Sendeeinrichtung werden die Sendesignale entsprechend verstärkt und einem Spannungs-Strom-Wandler zugeführt. Zwei Wechselströme, die noch durch Gleichströme überlagert sein können, werden mit umgekehrter Polarität aber gleicher Phase der Modulatorschaltung zugeführt.

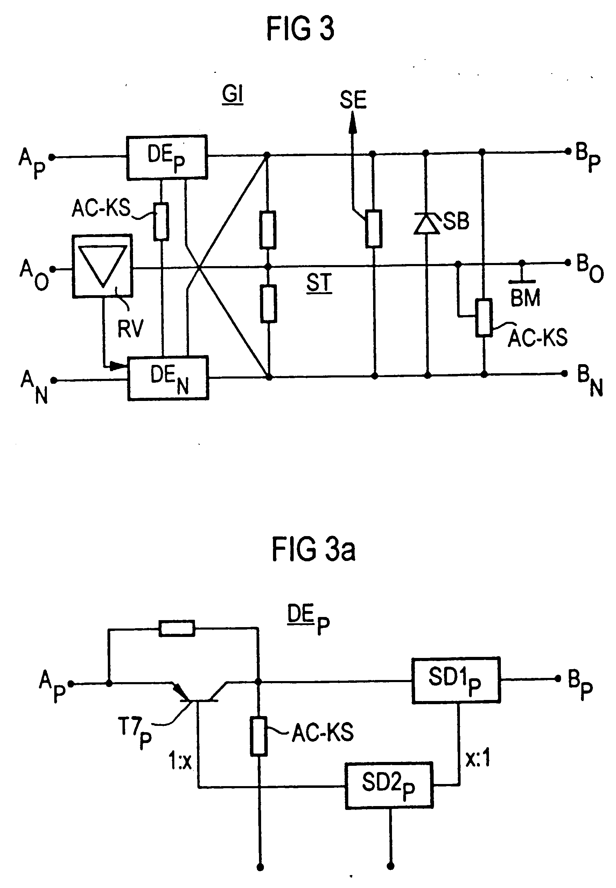

Figur 3 zeigt das Blockschaltbild für die Realisierung einer Geräteimpedanzeinrichtung (GI) mit Symmetrieregelung. Die Symmetrie bezieht sich hier auf den Gerätewiderstand, über den die Arbeitsspannung abfällt. Die Geräteimpedanzeinrichtung enthält im wesentlichen je eine Drosseleinrichtung (DE_{P}, DE_{N}) im positiven und negativen Leitungszug, einen symmetrischen Spannungsteiler (ST) und eine Regelverstärkereinrichtung (RV). Die Drosseleinrichtungen (DE_{P}, DE_{N}) sind eingangs mit den Knoten A_{P} bzw. A_{N} verbunden. Die Drosseleinrichtungen (DE_{P}, DE_{N}) sind jeweils an einem ersten Ausgang mit den Knoten B_{P} bzw. B_{N} verbunden. Die jeweils zweiten Ausgänge der Drosseleinrichtungen DE_{P} und DE_{N} sind über Kreuz mit den Knoten B_{N} bzw. B_{P} verbunden. Zwischen den Knoten B_{P} und B_{N} ist eine symmetrische Spannungsteilereinrichtung (ST) geschaltet, deren Fußpunkt mit dem Knoten B₀ verbunden ist. Zusätzlich ist eine Regelverstärkereinrichtung (RV) vorgesehen, deren erster Eingang mit dem Knoten B₀ verbunden ist und deren zweiter Eingang mit dem Knoten A₀ verbunden ist und die ausgangsseitig die Drosseleinrichtung DE_{N} ansteuert.

Die Regelverstärkereinrichtung besteht im wesentlichen aus einem Verstärker, zum Beispiel einem Operationsverstärker, dessen invertierende Eingänge mit den Knoten A₀ und B₀ verbunden sind. Ausgangsseitig steuert der Regelverstärker die Drosseleinrichtung an. Über den Spannungsteiler (ST) wird die Mittenspannung der Geräteimpedanzeinrichtung gewonnen. Diese Mittenspannung ist wegen der Toleranzen der Transistoren der Drosseleinrichtungen nicht auf dem gleichen Spannungsniveau wie die Mittenspannung der Modulatorschaltung. Der Verstärker der Regelverstärkereinrichtung gleicht diese Differenz durch Nachregelung aus. Dabei wird durch Addieren bzw. Subtrahieren eines Stromes der Regelverstärkereinrichtung zur Drosseleinrichtung DE_{N} das Differenzpotential des negativen Leitungszuges zwischen A_{N} und B_{N} auf das Niveau des positiven Leitungszuges gezogen. Damit entsteht am Massepunkt zwischen den Widerständen des Spannungsteilers (ST) der symmetrische Massepunkt, auf den alle Störungen kurzgeschlossen werden können. Die Potentiale in den Knoten B_{P} und B_{N} sind somit symmetrisch zum Bezugsmassepotential im Knoten B₀.

Zusätzlich ist zwischen den Knoten B_{P} und B_{N} eine Spannungsbegrenzungseinrichtung (SB), zum Beispiel eine Zenerdiode, vorgesehen, die die Spannungsbegrenzung für die gesamte Schaltung übernimmt. Üblicherweise wird hier eine Spannungsbegrenzung von 5 V oder 6,5 V gewählt. Außerdem sind AC-Kurzschlußeinrichtungen (AC-KS), zum Beispiel Kondensatoren, zwischen jedem der Knoten B_{P}, B_{N} und B₀ sowie zwischen den Drosseleinrichtungen vorgesehen. Weiterhin ist noch eine Spannungsstabilisierungsvorrichtung (SK) für die Steuereinrichtung zwischen den Knoten B_{P} und B_{N} vorgesehen. Diese Vorrichtung mißt den Stromverbrauch der Steuereinrichtung. Falls die Steuereinrichtung zuviel oder zuwenig Strom verbraucht, wird durch ein Signal an die Sendeeinrichtung der DC-Grundstrom in der Modulatoreinrichtung nachgeregelt. Es wird so vermieden, daß die Steuereinrichtung während des Betriebes abstürzt.

Figur 3a zeigt eine Realisierung der Drosseleinrichtung DE_{P}. Die Drosseleinrichtung DE_{P} besteht im wesentlichen aus dem Transistor T7_{P} und einem zur Emitter-Kollektor-Strecke parallel geschalteten Widerstand, sowie zwei Stromspiegel mit Diodenfunktion SD1_{P} und SD2_{P}. Die Emitter-Kollektor-Strecke des Transistors T7_{P} verbindet den Knoten A_{P} mit dem Eingang des Stromspiegels SD1_{P}. Der Strom wird mit einem Übersetzungsverhältnis von x:1 über den Stromspiegel SD1_{P} auf den Stromspiegel SD2_{P} und mit einem Übersetzungsverhältnis von 1:x auf den Basisanschluß des Transistors T7_{P} gespiegelt. Der Transistor T7_{P} hat damit die Funktion einer Gleichstromdrossel und bildet somit eine Stromsenke bzw. Gleichstrombegrenzung. Der zur Emitter-Kollektor-Strecke des Transistors T7_{P} parallel geschaltete Widerstand entspricht dem halben Gerätewiderstand. Üblicherweise ist der Gerätewiderstand auf 600 Ω genormt. Der Gerätewiderstand kann auch entfallen und durch eine aktive Impedanzeinstellung vorgenommen werden. An ihrem zweiten Ausgang sind die Stromspiegel SD1_{P} und SD2_{P} mit den Knoten B_{P} bzw. B_{N} verbunden. Kollektorseitig ist der positive Leitungszug der Drosseleinrichtung DE_{P} über eine AC-Kurzschlußeinrichtung mit der Kollektorseite des negativen Leitungszug der Drosseleinrichtung DE_{N} verbunden.

Zusätzlich enthält die elektronische Sprechschaltung einen Rufteil. Das Rufteil enthält einen Gleichrichter, sowie Vorrichtungen zur Ruferkennung, Rufabschaltung und DC/DC-Wandler zur Impedanztransformation. Ausgangsseitig wird vom Rufteil ein digitales Steuerpotential (LOW) zur Ansteuerung der Steuereinrichtung (KE) bereitgestellt. Die Steuereinrichtung (KE) wird damit im Ruffall versorgt. Außerdem wird ein weiteres Potential (VR), welches vom DC/DC-Wandler bereitgestellt wird, der Steuereinrichtung zugeführt. Durch den symmetrischen Aufbau der elektronischen Sprechschaltung sind sämtliche Potentiale des Rufteils ebenfalls an die symmetrische Schaltung angepaßt.

Die erfindungsgemäße symmetrische elektronische Sprechschaltung ist so ausgelegt, daß eine Realisierung durch eine integrierte Schaltung wie auch eine Realisierung mit diskreten Bauelementen bzw. eine Mischung aus beidem möglich ist.

### Bezugszeichenliste

- AC-KS: AC-Kurzschlußeinrichtung
- A_{P}, A_{N}, A₀: Knoten; Schnittstelle zwischen MS und GI
- BM: Bezugsmassepotential
- B_{P}, B_{N}, B₀: Knoten; Schnittstelle zwischen GI und KE
- DE_{P}, DE_{N}: Drosseleinrichtungen
- EE: Empfängereinrichtung
- GI: Geräteimpedanzeinrichtung
- GR: Gleichrichterschaltung
- KE: Steuereinrichtung
- LOW richtung: digitales Steuerpotential für die Steuerein
- L_{P}, L_{N}: Knoten; analoge Leitungsschnittstelle zwischen Betreibernetz und elektronischer Sprechschaltung
- ME_{P}, ME_{N}: Modulatoreinrichtungen
- MOD_{P}, MOD_{N}: Modulatorspannungsteiler
- MS: Modulatorschaltung
- RT: Rufteil
- RV: Regelverstärkereinrichtung
- SB: Spannungsbegrenzungseinrichtung
- SD1_{P}, SD2_{P}: Stromspiegel mit Diodenfunktion
- SE: Sendeeinrichtung
- SK: Spannungsstabilisierungsvorrichtung für die Steuereinrichtung
- SS_{N}: Schleifenstromschließer
- ST: Spannungsteiler
- SV: Schaltvorichtung
- T₀: Schalttransistor
- T1_{N}: MOS-Transistor als Schleifenstromschließer
- T7_{P}: Transistor mit Drosselfunktion, Gleichstrom quelle
- VNS_{N}: Vergleicher- und Nachführstufe
- VR: Rufteilpotential für die Steuereinrichtung
- x:1, 1:x: Stromübersetzung der Stromspiegel

## Patentansprüche

1. Elektronische Sprechschaltungsanordnung, die über eine erste und zweite Leitungsklemme (L_{P}, L_{N}) an eine Telefonleitung anschließbar ist,
- mit einem Rufteil (RT), der mit den Leitungsklemmen (L_{P}, L_{N}) verbunden ist;
- mit einer Modulatorschaltung (MS), die eingangsseitig mit den Leitungsklemmen (L_{P}, L_{N}) verbunden ist und ausgangsseitig mit einem ersten, zweiten und dritten Knoten (A_{P}, A_{N}, A₀₎ verbunden ist;
- mit einer Sendeeinrichtung (SE), die mit der Modulatorschaltung (MS) verbunden ist, zum Senden von Signalen;
- mit einer Empfangseinrichtung (EE), die mit der Modulatorschaltung (MS) verbunden ist, zum Empfangen von Signalen;
- mit einer Geräteimpedanzeinrichtung (GI), die über den ersten, zweiten und dritten Knoten (A_{P}, A_{N}, A₀) an die Modulatorschaltung (MS) angekoppelt ist und ausgangsseitig mit einem vierten (B_{P}), einem fünften (B_{N}) und einem sechsten Knoten (B₀) verbunden ist; und
- mit einer Steuereinrichtung (KE), die über den vierten, fünften und sechsten Knoten (B_{P}, B_{N}, B₀) mit der Geräteimpedanzeinrichtung (GI) verbunden ist,
- wobei die Potentiale im ersten und zweiten Knoten (A_{P}, A_{N}),im vierten und fünften Knoten (B_{P}, B_{N}) und an der ersten und zweiten Leitungsklemme (L_{P}, L_{N}) jeweils einen positiven und einen negativen Leitungszug bilden,
- wobei die Potentiale im ersten und zweiten Knoten (A_{P}, A_{N}) symmetrisch um ein erstes Mittenpotential im dritten Knoten (A₀) angeordnet sind, und
- wobei die Potentiale im vierten und fünften Knoten (B_{P}, B_{N}) symmetrisch um ein zweites Mittenpotential im sechsten Knoten (B₀) angeordnet sind.

2. Elektronische Sprechschaltung nach Anspruch 1,
**dadurch gekennzeichnet,**
daß das zweite Mittenpotential das Bezugsmassepotential (BM) ist.

3. Elektronische Sprechschaltung nach einem der Ansprüche 1 - 2,
**dadurch gekennzeichnet,**
daß in der symmetrischen Modulatorschaltung (MS) Mittel zur Spannungsstabilisierung enthält, wobei zur Spannungsstabilisierung jeweils eine Modulatoreinrichtung (ME_{P}, ME_{N}) im positiven und negativen Leitungszug vorgesehen sind, die über eine Schaltvorrichtung (SV) miteinander verbunden sind, wobei an einem Ausgang der Schaltvorrichtung (SV), der mit dem dritten Knoten (A₀) verbunden ist, das erste Mittenpotential anliegt.

4. Elektronische Sprechschaltung nach einem der Ansprüche 1 bis 3,
**dadurch gekennzeichnet,**
daß der Gerätewiderstand der Geräteimpedanzeinrichtung (GI) sich zur Hälfte auf den positiven Leitungszug und zur Hälfte auf den negativen Leitungszug aufteilt.

5. Elektronische Sprechschaltung nach Anspruch 4,
**dadurch gekennzeichnet,**
daß ein symmetrischer Spannungsteiler (ST) in der symmetrischen Geräteimpedanzeinrichtung (GI) vorgesehen ist, welche zwischen dem vierten und fünften Knoten (B_{P}, B_{N}) angeordnet ist und deren Fußpunkt mit dem sechsten Knoten (B₀) verbunden ist.

6. Elektronische Sprechschaltung nach Anspruch 4,
**dadurch gekennzeichnet,**
daß die Geräteimpedanzeinrichtung (GI) eine Regelverstärkereinrichtung (RV) enthält, welche Toleranzen zwischen der ersten und der zweiten Mittenspannung ausgleicht, indem jeweils das Potential des vierten Knotens (B_{P}) auf das Potential des fünften Knotens (B_{N}) nachregelt wird.

7. Elektronische Sprechschaltung nach einem der Ansprüche 4 bis 6,
**dadurch gekennzeichnet,**
daß die symmetrische Geräteimpedanzeinrichtung (GI) jeweils eine Drosseleinrichtung (DE_{P}, DE_{N}) zur Gleichstrombegrenzung im positiven und negativen Leitungszug enthält.

8. Elektronische Sprechschaltung nach einem der Ansprüche 4 bis 7,
**dadurch gekennzeichnet,**
daß jede Drosseleinrichtung (DE_{P}, DE_{N}) jeweils zwei Stromspiegel(SD1_{P}, SD2_{P}) mit zueinander umgekehrten Übersetzungsverhältnissen (x:1, 1:x) und einen Drosseltransistor (T7_{P}) enthält, wobei der Kollektorstrom der Drosseltransistoren (T7_{P}) die Eingänge der jeweils ersten Stromspiegel (SD1_{P}) ansteuert und ein Ausgang der jeweils zweiten Stromspiegel (SD2_{P}) die Basisanschlüsse der jeweiligen Drosseltransistoren (T7_{P}) ansteuert.

9. Elektronische Sprechschaltung nach einem der Ansprüche 4 bis 8,
**dadurch gekennzeichnet,**
daß die Geräteimpedanzeinrichtung (GI) mindestens eine der Einrichtungen Spannungsbegrenzungseinrichtungen (SB), Einrichtungen zum Kurzschließen von Wechselstromsignalen (AC-KS), Einrichtungen zum Schutz vor hohen Frequenzen und Spannungsstabilisierungseinrichtung (SK) für den Steuereinrichtung enthält.

10. Elektronische Sprechschaltung nach einem der voerhergehenden Ansprüche,
**dadurch gekennzeichnet,**
daß das Empfangssignal mit Hilfe einer Anordnung mit Hybrid-Funktion (MOD_{P}, MOD_{N}) vom Sendesignal getrennt wird und der Empfängereinrichtung (EE) zugeführt wird.

11. Elektronische Sprechschaltung nach einem der vorhergehenden Ansprüche,
**dadurch gekennzeichnet,**
daß das Rufteil (RT) Mittel zur Ruferkennung und Rufabschaltung, einen DC/DC-Wandler zur Impedanztransformation und eine Vorrichtung zur Rufspannungsgleichrichtung aufweist und Steuersignale für Ruferkennung und Rufabschaltung, sowie ein erstes Steuerpotential (VR) und ein zweites Steuerpotential (LOW) bereitstellt, die an die Symmetrie der Modulatorschaltung (MS), der Geräteimpedanzeinrichtung (GI) und der Steuereinrichtung (KE) angepaßt sind.
